(19) Europäisches Patentamt European Patent Office Office européen des brevets

(11) **EP 4 368 390 B1**

(12) **EUROPEAN PATENT SPECIFICATION**

(45) Date of publication and mention
of the grant of the patent:
**31.12.2025  Bulletin 2026/01**

(21) Application number: **22858175.7**

(22) Date of filing: **28.06.2022**

(51) International Patent Classification (IPC):
*B32B 27/32* (2006.01)     *B32B 7/022* (2019.01)
*B32B 9/00* (2006.01)     *B32B 27/10* (2006.01)
*B65D 65/40* (2006.01)     *B32B 3/26* (2006.01)
*B32B 7/02* (2019.01)     *B32B 27/34* (2006.01)
*B32B 27/36* (2006.01)     *B32B 29/00* (2006.01)

(52) Cooperative Patent Classification (CPC):
**B32B 7/022; B32B 3/266; B32B 7/02; B32B 7/12;
B32B 27/08; B32B 27/10; B32B 27/32;
B32B 27/325; B32B 27/34; B32B 27/36;
B32B 29/00;** B32B 2250/04; B32B 2250/44;
B32B 2255/10; B32B 2255/20;           (Cont.)

(86) International application number:
**PCT/JP2022/025824**

(87) International publication number:
**WO 2023/021852 (23.02.2023 Gazette 2023/08)**

(54) **GAS BARRIER LAMINATE AND CONTAINER**

GASSPERRLAMINAT UND BEHÄLTER

STRATIFIÉ DE BARRIÈRE CONTRE LES GAZ ET CONTENANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **18.08.2021  JP 2021133575**

(43) Date of publication of application:
**15.05.2024  Bulletin 2024/20**

(73) Proprietor: **TOPPAN INC.
Tokyo 110-0016 (JP)**

(72) Inventor: **IMAIZUMI Shukiko
Tokyo 110-0016 (JP)**

(74) Representative: **TBK
Bavariaring 4-6
80336 München (DE)**

(56) References cited:
**EP-A1- 3 492 258      JP-A- 2006 256 293
JP-A- 2008 273 546      JP-A- 2014 196 143
JP-A- 2021 054 078      JP-A- 2021 054 078
US-A1- 2019 176 455**

(52) Cooperative Patent Classification (CPC): (Cont.)
B32B 2255/205; B32B 2270/00; B32B 2307/54;
B32B 2307/58; B32B 2307/7242; B32B 2307/7244;
B32B 2439/00; B32B 2439/70; B65D 5/064;
B65D 2231/022; B65D 2565/387; Y02W 30/80

## Description

## Technical Field

The present disclosure relates to a gas barrier laminate and a container.

## Background Art

Conventionally, in the field of packaging materials, paper containers for liquids mainly made of paper have been used. Patent Literature 1, Patent Literature 2 and Patent Literature 3 disclose a paper container for liquid made of a packaging material including a paper substrate, a specific barrier layer, an adhesive resin layer of a specific thickness, and a heat-sealable resin layer.

## Citation List

## Patent Literature

[Patent Literature 1] Japanese Unexamined Patent Publication No. 2001-171649
[Patent Literature 2] JP2021 054078 A1
[Patent Literature 3] EP 3 492 258 A1

## Summary of Invention

## Technical Problem

Incidentally, a straw piercing opening for sucking out the contained contents with a straw may be formed in a paper container. The straw piercing opening is formed by forming an opening passing through the paper substrate.
However, when the straw piercing opening is formed in the paper container for liquid disclosed in Patent Literature 1, there is room for improvement in terms of straw piercing properties.
Furthermore, in order to improve the straw piercing properties in a paper container, it is conceivable to use aluminum foil as a gas barrier layer. However, such paper containers are not preferred because in that case a metal detector cannot be used to test for foreign matter contamination, and a recycling process requires a step to separate the aluminum foil from other materials. Therefore, there is a need for a packaging material that does not use aluminum foil and has excellent straw piercing properties.

## Solution to Problem

The present disclosure provides a gas barrier laminate with excellent straw piercing properties, and a container obtained using the same.
A gas barrier laminate according to one aspect of the present disclosure includes a laminated structure including a paper substrate, an adhesive resin layer, a gas barrier layer, and a sealant layer in this order, wherein the sealant layer includes a cyclic olefin resin and at least one of a polyethylene resin and a polypropylene resin, and when a tensile modulus of the gas barrier layer is defined as $T_A$ and a tensile modulus of the sealant layer is defined as $T_B$, $T_A$ and $T_B$ satisfy the following Formula (1).

$$-0.26 \leqq (T_B - T_A)/T_A \leqq 0.30 \ldots \text{Formula (1)}$$

The gas barrier laminate according to one aspect of the present disclosure has excellent straw piercing properties. It is presumed that such an effect is produced by the following mechanism. That is, the straw piercing opening formed in the gas barrier laminate has an opening passing through the paper substrate, and includes the adhesive resin layer, the gas barrier layer, and the sealant layer in this order. Since the adhesive resin layer is on the outer layer side and the sealant layer is on the inner layer side, when a straw is stabbed into the piercing opening, an impact applied from the straw is transmitted to the sealant layer while being gradually attenuated when the straw passes through the adhesive resin layer and the gas barrier layer. Here, since the sealant layer contains a cyclic olefin resin and at least one of a polyethylene resin and a polypropylene resin, and the tensile modulus of the gas barrier layer and the sealant layer satisfy

3

the above Formula (1), when the impact applied from the straw is transmitted to the sealant layer, the sealant layer is easily torn together with the gas barrier layer. As a result, the gas barrier laminate has excellent straw piercing properties.

A gas barrier laminate according to another aspect of the present disclosure includes a laminated structure including a paper substrate, an adhesive resin layer, a gas barrier layer, and a sealant layer in this order, wherein the adhesive resin layer includes a cyclic olefin resin and at least one of a polyethylene resin and a polypropylene resin, and when a tensile modulus of the gas barrier layer is defined as $T_A$ and a tensile modulus of the adhesive resin layer is defined as $T_C$, $T_A$ and $T_C$ satisfy the following Formula (2).

$$-0.26 \leqq (T_C - T_A)/T_A \leqq 0.30 \ldots \text{Formula (2)}$$

The gas barrier laminate according to another aspect of the present disclosure has excellent straw piercing properties. It is presumed that such an effect is produced by the following mechanism. That is, when a straw is stabbed into the straw piercing opening, the impact applied from the straw causes the straw to pass through the adhesive resin layer and reach the gas barrier layer. Here, since the adhesive resin layer contains a cyclic olefin resin and at least one of a polyethylene resin and a polypropylene resin, and the tensile modulus of the adhesive resin layer and the gas barrier layer satisfies the above formula (2), the straw thus easily reaches the gas barrier layer due to the impact applied from the straw, and the gas barrier layer is easily torn together with the adhesive resin layer. Further, when the gas barrier layer is torn together with the adhesive resin layer, the impact from the straw is also propagated to the sealant layer located outside the gas barrier layer, and the sealant layer is easily torn. As a result, the gas barrier laminate has excellent straw piercing properties.

Because the container has excellent recyclability and even better straw piercing properties, the gas barrier layer may include a polyolefin film as a film substrate, the sealant layer and the polyolefin film may be in direct contact with each other, and a lamination strength between the sealant layer and the polyolefin film may be 1 N/15 mm or more.

Because the container has excellent water resistance, the gas barrier layer may have a vapor deposition layer containing an inorganic oxide.

A container according to still another aspect of the present disclosure is constituted of the gas barrier laminate described above. This container has excellent straw piercing properties.

## Advantageous Effects of Invention

According to the present disclosure, a gas barrier laminate that can provide a container with excellent straw piercing properties, and a container obtained using the same are provided.

## Brief Description of Drawings

FIG. 1 is an end surface view schematically showing a gas barrier laminate according to an embodiment of the present disclosure.
FIG. 2 is a perspective view schematically showing a container according to an embodiment of the present disclosure.

## Description of Embodiments

Embodiments of the present disclosure will be described below with reference to the drawings. The present disclosure is not limited to the following embodiments.

[Gas barrier laminate]

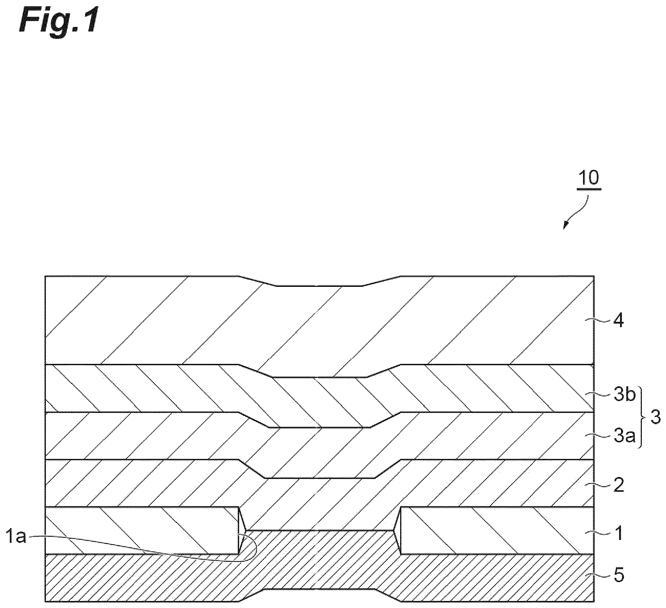

Hereinafter, a gas barrier laminate (hereinafter, also simply referred to as a "laminate") according to one embodiment will be described. FIG. 1 is an end surface view schematically showing the laminate according to the embodiment. As shown in FIG. 1, the laminate 10 according to this embodiment has a laminated structure including a paper substrate 1, an adhesive resin layer 2, a gas barrier layer 3, and a sealant layer 4 in this order. An opening 1a which passes through the paper substrate 1 and serves as a straw piercing opening is formed in the paper substrate 1. A protective layer 5 is disposed on a surface of the paper substrate 1 opposite to a surface in contact with the adhesive resin layer 2. The gas barrier layer 3 includes a vapor deposition layer 3a and a film substrate 3b. Each structure of the laminate 10 will be described below.

(Paper substrate)

As the paper substrate 1, for example, paper having shaping properties, bending resistance, rigidity, stiffness, strength, and the like can be used. As such paper, for example, bleached or unbleached paper with good ability to be sized, pure white roll paper, kraft paper, paperboard, and processed paper can be used.

A basis weight of the paper substrate 1 is preferably 80 to 600 g/m$^2$, and more preferably 200 to 450 g/m$^2$, since a resulting container then has better gas barrier properties.

Desired printing patterns such as letters, figures, pictures, and symbols can be arbitrarily formed on the paper substrate 1 using a normal printing method.

(Adhesive resin layer)

The adhesive resin layer 2 includes a cyclic olefin resin and at least one of a polyethylene resin and a polypropylene resin.

Examples of the polyethylene resin include low-density polyethylene, high-density polyethylene, copolymer resins of polyethylene and polyvinyl acetate, acid anhydride-modified polyethylene represented by terpolymers such as ethylene/ethyl acrylate/maleic anhydride, and epoxy compound-modified polyethylene such as ethylene/glycidyl methacrylate copolymer. The polyethylene resin is preferably low-density polyethylene because it improves piercing properties. Examples of the low-density polyethylene include linear low-density polyethylene and branched low-density polyethylene, and branched low-density polyethylene is preferred. The branched low-density polyethylene is preferably obtained by a high-pressure radical polymerization process, and more preferably obtained by homopolymerizing ethylene by the high-pressure radical polymerization process. Such low-density polyethylene has low mechanical strength and is more brittle than other polyolefins, and thus it has good piercing properties. The polyethylene resin may be used alone or in combination of two or more.

A density of the low-density polyethylene is preferably 0.900 g/cm$^3$ to 0.935 g/cm$^3$, and more preferably 0.915 g/cm$^3$ to 0.930 g/cm$^3$. When the density is within the above range, film formability and extrusion suitability of the adhesive resin layer 2 will improve because the low-density polyethylene has appropriate rigidity.

A melting point of the polyethylene resin is preferably lower than a glass transition point (Tg) of the cyclic olefin resin, preferably 60 to 130°C, and more preferably 70 to 120°C. When the melting point is within this range, coextrusion processability and compatibility will be improved.

Examples of the polypropylene resin include propylene homopolymers and propylene/$\alpha$-olefin random copolymers, acid anhydride-modified polypropylene represented by terpolymers such as propylene-ethyl acrylate-maleic anhydride, and epoxy compound-modified polypropylene such as propylene/glycidyl methacrylate copolymer. Examples of the propylene/$\alpha$-olefin random copolymer include propylene-ethylene copolymers, propylene-butene-1 copolymers, and propylene-ethylene-butene-1 copolymers. The polypropylene resin may be one synthesized using a metallocene catalyst. The polypropylene resin is preferably a propylene-$\alpha$-olefin random copolymer, and more preferably a propylene/$\alpha$-olefin random copolymer polymerized using a metallocene catalyst. When the polypropylene resins are used, heat resistance of the adhesive resin layer 2 can be improved and a softening temperature thereof can be increased. Thus, the laminate 10 can be suitably used for boiling or hot filling at 100°C or lower, or sterilization by steam heating or high-pressure heating such as retort sterilization at 100°C or higher. The polypropylene resin may be used alone or in combination of two or more.

The melting point of the polypropylene resin is preferably **110** to 165°C, and more preferably 115 to 160°C. The melting point of the polypropylene resin can be changed as appropriate according to the glass transition point (Tg) of the cyclic olefin resin.

The cyclic olefin resin is not particularly limited, but examples thereof include ring-opening polymers (COP) of norbornene monomers, norbornene polymers (COC), vinyl alicyclic hydrocarbon polymers, and cyclic conjugated diene polymers, and the like. Among them, norbornene polymers are preferred from the viewpoint of compatibility with the polyethylene resin.

Examples of commercially available ring-opening polymers of norbornene monomers include ZEONOR (trade name) manufactured by Zeon Corporation. Examples of commercially available norbornene polymers include, for example, APEL (trade name) manufactured by Mitsui Chemicals, Inc. and TOPAS (trade name) manufactured by Polyplastics Co., Ltd.

A density of the cyclic olefin resin is preferably 0.99 g/cm$^3$ to 1.05 g/cm$^3$, and more preferably 1.00 g/cm$^3$ to 1.03 g/cm$^3$. When the density is within the above range, the film formability and extrusion suitability of the adhesive resin layer 2 will be improved.

The glass transition point (Tg) of the cyclic olefin resin is preferably 60°C to 180°C, and more preferably 70°C to 150°C. When Tg is within the above range, the film formability and extrusion suitability of the adhesive resin layer 2 will be improved.

A mass ratio of a total mass of the polyethylene resin and polypropylene resin in the adhesive resin layer 2 to a mass of the cyclic olefin resin (the total mass of polyethylene resin and polypropylene resin/the mass of cyclic olefin resin) is preferably 70/30 or more, more preferably 80/20 or more, preferably 95/5 or less, and more preferably 90/10 or less. When the mass ratio is within this range, the piercing properties are further improved.

The total mass of the polyethylene resin and polypropylene resin in the adhesive resin layer 2 and the mass of the cyclic olefin resin may be 80% by mass or more, 90% by mass or more, or 95% by mass or more based on a total amount of the adhesive resin layer 2.

A thickness of the adhesive resin layer 2 is, for example, preferably 1 to 40 $\mu$m, more preferably 10 to 40 $\mu$m, and even more preferably 15 to 25 $\mu$m. The adhesive resin layer 2 may or may not be uniaxially stretched.

(Sealant layer)

The sealant layer 4 includes a cyclic olefin resin and at least one of a polyethylene resin and a polypropylene resin. As the polyethylene resin, polypropylene resin, and cyclic olefin resin, the same ones as those exemplified for the adhesive resin layer 2 can be used. The mass ratio and total mass of the polyethylene resin, polypropylene resin, and cyclic olefin resin in the sealant layer 4 are the same as those in the adhesive resin layer 2.

A thickness of the sealant layer 4 is not particularly limited, but it is preferably 20 $\mu$m to 50 $\mu$m in consideration of suitability as a packaging material and processability when other films are laminated or a vapor deposition layer is formed.

Components such as an antifogging agent, an antistatic agent, a heat stabilizer, a nucleating agent, an antioxidant, a lubricant, an antiblocking agent, a mold release agent, an ultraviolet absorber, and a coloring agent may be added to the sealant layer 4, as necessary, within a range that does not impair the purpose of the present disclosure.

A method of laminating the sealant layer 4 may be, for example, an extrusion lamination method, a T-die extrusion method, a coextrusion lamination method, an inflation method, or a coextrusion inflation method.

(Vapor deposition layer)

The vapor deposition layer 3a is a layer in which silicon oxide ($SiO_x$) is vapor-deposited. Thus, the laminate 10 has excellent water resistance. A thickness of the vapor deposition layer 3a may be appropriately set according to the purpose of use, and is preferably 1 to 300 nm, more preferably 10 to 300 nm, and still more preferably 30 to 100 nm. Sufficient continuity of the vapor deposition layer 3a can be easily ensured by setting the thickness of the vapor deposition layer 3a to 1 nm or more, occurrence of curls and cracks can be sufficiently curbed by setting the thickness to 300 nm or less, and sufficient gas barrier performance and flexibility can be easily achieved.

The vapor deposition layer 3a may be a layer formed by vapor depositing an inorganic oxide or metal other than silicon oxide ($SiO_x$). The vapor deposition layer 3a may be obtained by vapor-depositing aluminum, for example, or may contain aluminum oxide ($AlO_x$).

The vapor deposition layer 3a is preferably formed by vacuum film forming methods from the viewpoint of oxygen gas barrier performance and film uniformity. The film forming methods include known methods such as vacuum deposition methods, sputtering methods, and chemical vapor deposition (CVD) methods, but the vacuum deposition methods are preferred because of fast film formation rate and high productivity thereof. Among the vacuum deposition methods, film formation methods using electron beam heating are particularly effective because a film forming rate can be easily controlled by an irradiation area, an electron beam current, or the like, and a temperature of the vapor deposition material can be raised and lowered in a short time.

(Film substrate)

Examples of the material for the film substrate 3b include a polyolefin film, a polyethylene terephthalate film, and a nylon film. Preferably, the film substrate 3b is a polyolefin film. When the polyolefin film is used, it is possible to recycle it together with the adhesive resin layer 2 and the sealant layer 4 as an olefin plastic material. Examples of the polyolefin films include polypropylene films and polyethylene films. The film substrate 3b may be a uniaxially stretched film or a biaxially stretched film.

When the film substrate 3b is a polyolefin film, a lamination strength between the film substrate 3b and the sealant layer 4 is preferably 1 N/15 mm or more, more preferably 1.5 N/15 mm or more, and even more preferably 2N /15 mm or more, since it has better piercing properties. The lamination strength is measured in accordance with JIS Z-1707.

Wettability of a surface of the film substrate 3b in contact with the polyolefin film that achieves such lamination strength may be 34 dynes or more when the lamination strength is 1 N/15mm or more, may be 36 dynes or more when the lamination strength is 1.5 N/15 mm or more, and may be 38 dynes or more when the lamination strength is 2 N/15 mm or more. The wettability is measured in accordance with JIS K6768:1999. The wettability of the surface of the film substrate 3b can be adjusted, for example, by subjecting the film substrate 3b to a corona treatment.

A thickness of the film substrate 3b is preferably 15 to 30 $\mu$m, and more preferably 18 to 20 $\mu$m, from the viewpoint of ease of processing such as lamination.

(Protective layer)

A material of the protective layer 5 may be, for example, a polyethylene resin. When the protective layer 5 is made of a polyethylene resin, a resulting container has excellent recyclability. The polyethylene resin is preferably medium-density polyethylene or high-density polyethylene because it has high physical strength and the resulting container has even better gas barrier properties. A thickness of the protective layer 5 is preferably 10 to 30 $\mu$m, and more preferably 15 to 20 $\mu$m, because the resulting container has better gas barrier properties.

In the laminate 10, when a tensile modulus of the gas barrier layer 3 is defined as $T_A$ and a tensile modulus of the sealant layer 4 is defined as $T_B$, $T_A$ and $T_B$ satisfy the following Formula (1).

$$-0.26 \leqq (T_B\text{-}T_A)/T_A \leqq 0.30 \ldots \text{Formula (1)}$$

$(T_B\text{-}T_A)/T_A$ is preferably -0.20 or more, and more preferably -0.10 or more, because the piercing properties are even better. From the same viewpoint, $(T_B\text{-}T_A)/T_A$ is preferably 0.25 or less, more preferably 0.10 or less, and even more preferably 0.05 or less.

In the laminate 10, when the tensile modulus of the gas barrier layer 3 is defined as $T_A$ and the tensile modulus of the adhesive resin layer 2 is defined as $T_C$, $T_A$ and $T_C$ satisfy the following Formula (2).

$$-0.26 \leqq (T_C\text{-}T_A)/T_A \leqq 0.30 \ldots \text{Formula (2)}$$

$(T_C\text{-}T_A)/T_A$ is preferably -0.20 or more, and more preferably -0.10 or more, because the piercing properties are even better. From the same viewpoint, $(T_C\text{-}T_A)/T_A$ is preferably 0.25 or less, more preferably 0.10 or less, and even more preferably 0.05 or less.

The tensile modulus $T_A$ of the gas barrier layer 3 may be 800 MPa or more and 1300 MPa or less.

$T_A$, $T_B$ and $T_C$ are measured in accordance with ISO 527.

The laminate 10 is obtained by laminating each of the layers. Examples of methods of laminating each of the layers include an extrusion lamination method, a T-die extrusion method, a coextrusion lamination method, an inflation method, and a coextrusion inflation method. A main surface of each of the layers may be subjected to, for example, a corona treatment, a plasma treatment, and an ozone treatment before lamination.

The laminate 10 having the above structure has excellent straw piercing properties. It is presumed that such an effect is produced by the following mechanism. That is, when a straw is stabbed into the straw piercing opening, an impact applied from the straw is transmitted to the sealant layer while being gradually attenuated as the straw passes through the adhesive resin layer and the gas barrier layer. Here, the adhesive resin layer 2 and the sealant layer 4 contain a cyclic olefin resin and at least one of a polyethylene resin and a polypropylene resin, and $T_A$, $T_B$, and $T_C$ satisfy Formulas (1) and (2). Therefore, the impact applied from the straw is easily transmitted to the sealant layer 4, and the adhesive resin layer 2, gas barrier layer 3, and sealant layer 4 are all easily torn. As a result, the laminate 10 has excellent straw piercing properties.

The laminate 10 has excellent straw piercing properties. Therefore, even when a material of the straw to be stabbed is not the commonly used plastic but is made of a material that is difficult to apply a force to, such as paper, the straw can be stabbed well.

Although the embodiment of the present disclosure has been described in detail above, the present disclosure is not limited to the above embodiment. For example, in the laminate 10, the lamination order of the film substrate 3b and the vapor deposition layer 3a may be changed. In that case, the lamination strength between the film substrate 3b and the adhesive resin layer 2 may be the same as the lamination strength between the film substrate 3b and the sealant layer 4 described above. In the laminate 10, the vapor deposition layer 3a may not be provided.

In the laminate 10, only the adhesive resin layer 2 of the adhesive resin layer 2 and the sealant layer 4 may contain cyclic olefin resin and at least one of a polyethylene resin and a polypropylene resin. In that case, the sealant layer 4 does not need to satisfy above Formula (1).

In the laminate 10, only the sealant layer 4 of the adhesive resin layer 2 and the sealant layer 4 may contain a cyclic olefin resin and at least one of a polyethylene resin and a polypropylene resin. In that case, the adhesive resin layer 2 does not need to satisfy above Formula (2).

[Container]

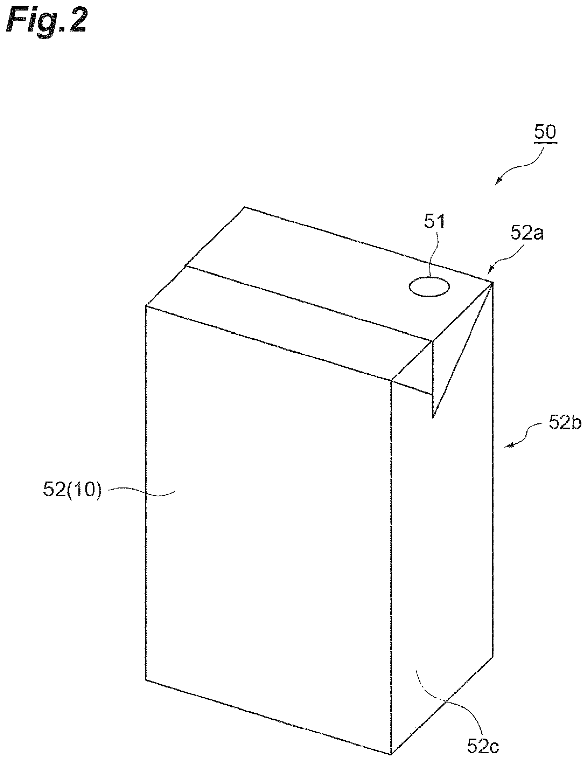

Hereinafter, a container (a paper container) according to this embodiment will be described. The container 50 shown in FIG. 2 is configured of the laminate 10.

The container 50 can be filled and packaged with, for example, various foods and drinks, chemicals such as adhesives and pressure-sensitive adhesives, cosmetics, miscellaneous goods such as pharmaceuticals, and various other articles. Since the container 50 has excellent piercing properties and gas barrier properties, it is particularly suitable for use as a packaging container for filling and packaging alcohol, dairy products such as milk, juices such as fruit juices, mineral water, liquid seasonings such as soy sauce and sauces, and liquid foods and drinks such as curry, stew, and soup.

The container 50 is a brick type container. The container 50 includes a container main body 52 having a rectangular parallelepiped shape and having an upper portion 52a in which a straw piercing opening 51 is provided, side surfaces 52b, and a bottom portion 52c. The straw piercing opening 51 is a portion of the laminate 10 in which the opening 1a is formed in the paper substrate 1.

Although the container according to the present embodiment has been described in detail above, the container according to the present disclosure is not limited to the above embodiment. For example, a shape of the container is not limited to the shape of the container 50, and may be, for example, a gable top type or a triangular pyramid shape. Moreover, the shape of the container main body may be cylindrical.

[Examples]

Hereinafter, the present disclosure will be described in more detail on the basis of Examples and Comparative examples, but the present disclosure is not limited to the following Examples.

The following materials were prepared as the cyclic olefin resin and the polyethylene resin.

· Cyclic olefin resin A: TOPAS 5013F-04 (trade name, norbornene polymer, tensile modulus: 2600 MPa, manufactured by Polyplastics Co., Ltd.)
· Cyclic olefin resin B: ZEONOR 1020R (trade name, ring-opening polymer of norbornene monomer, cycloolefin polymer, tensile modulus: 2100 MPa, manufactured by Zeon Corporation.)
· Cyclic olefin resin C: TOPAS 6015S-04 (trade name, norbornene polymer, tensile modulus 3000 MPa, manufactured by Polyplastics Co., Ltd.)
· Cyclic olefin resin D: TOPAS 9506F-500 (trade name, norbornene polymer, tensile modulus 1800 MPa, manufactured by Polyplastics Co., Ltd.)
· Polyethylene resin A: LW14A (product name, low density polyethylene, tensile modulus: 520 MPa, manufactured by Tosoh Corporation)
· Polyethylene resin B: 6530 (trade name, high density polyethylene, tensile modulus: 1020 MPa, manufactured by Tosoh Corporation)

The tensile modulus of the cyclic olefin resin and polyethylene resin is a value measured in accordance with ISO 527.

[Manufacture of laminate]

(Example 1)

A laminate according to this example was obtained through the following steps. That is, as resins that forms the sealant layer and the adhesive resin layer, the polyethylene resin A and the cyclic olefin resin A were mixed by dry blending to obtain a resin mixture. The mass ratio of the polyethylene resin to the cyclic olefin resin (mass of polyethylene resin/mass of cyclic olefin resin) was 80/20.

Next, a gas barrier film was prepared in which a vapor deposition layer containing silica as a main component (a silica vapor deposition layer, thickness: 50 nm) was formed on one surface of a film substrate (material: polypropylene resin, thickness: 18 μm). The corona treatment was performed on the surface of the film substrate opposite to the surface on which the vapor deposition layer was formed so that the wettability of the surface was 40 dynes. A sealant layer (thickness: 30 μm) was formed by extrusion-laminating the resin mixture on the corona-treated surface of the film substrate to obtain an inner layer material. The wettability of the surface of the film substrate was measured in accordance with JIS K6768:1999 using a mixed liquid for wetting tension test (manufactured by Kanto Kagaku Co., Ltd.).

On the other hand, a protective layer (material: polyethylene resin, thickness: 20 μm) was formed on one surface of a paper substrate (basis weight: 260 g/m$^2$) formed with a penetrating opening as a straw piercing opening, to obtain an outer layer material containing the paper substrate. A laminate (a packaging material) was obtained by bonding the inner

EP 4 368 390 B1

layer material and the outer layer material together using a resin mixture (an adhesive resin layer) by extrusion lamination so that the vapor deposition layer of the inner layer material and the paper substrate of the outer layer material faced each other. The thickness of the adhesive resin layer was 15 μm.

(Example 2)

A laminate was obtained in the same manner as in Example 1, except that the cyclic olefin resin B was used in place of the cyclic olefin resin A.

(Example 3)

A laminate was obtained in the same manner as in Example 1, except that the cyclic olefin resin C was used in place of the cyclic olefin resin A.

(Example 4)

A laminate was obtained in the same manner as in Example 1, except that the cyclic olefin resin C was used instead of the cyclic olefin resin A, and the mass ratio of the polyethylene resin to the cyclic olefin resin was 85/15.

(Example 5)

A laminate according to this example was obtained through the following steps. That is, a resin mixture was obtained in the same manner as in Example 1, except that the polyethylene resin B was used in place of the polyethylene resin A. Next, a gas barrier film was prepared in the same manner as in Example 1 and subjected to the corona treatment. A sealant layer (thickness: 30 μm) was formed by coextrusion-laminating the resin mixture and the polyethylene resin A on the corona-treated surface of the film substrate to obtain an inner layer material. A layer made of the resin mixture was formed on the corona-treated surface of the film substrate by coextrusion lamination, and a layer made of the polyethylene resin A was formed on the layer made of the resin mixture. A laminate was obtained in the same manner as in Example 1 using the obtained inner layer material.

(Example 6)

A laminate was obtained in the same manner as in Example 5, except that the mass ratio of the polyethylene resin to the cyclic olefin resin was 95/5.

(Example 7)

A laminate was obtained in the same manner as in Example 1, except that the polyethylene resin A was used instead of the resin mixture as the resin for bonding the inner layer material and the outer layer material together.

(Comparative example 1)

A laminate was obtained in the same manner as in Example 1, except that the mass ratio of the polyethylene resin to the cyclic olefin resin was 97/3.

(Comparative example 2)

A laminate was obtained in the same manner as in Example 1, except that cyclic olefin resin D was used in place of the cyclic olefin resin A.

(Comparative example 3)

A laminate was obtained in the same manner as in Example 1, except that the mass ratio of the polyethylene resin to the cyclic olefin resin was 50/50.

[Measurement of tensile modulus]

The tensile modulus $T_A$, $T_B$, and $T_C$ of the gas barrier film, the sealant layer, and the adhesive resin layer of the laminate according to each of the examples and comparative examples were measured in accordance with ISO 527-3. The results are shown in Table 1. Furthermore, $(T_B-T_A)/T_A$ and $(T_C-T_A)/T_A$ were calculated and shown in Table 1.

[Measurement of lamination strength]

The lamination strength between the sealant layer and the gas barrier film was measured for the laminate obtained in each of the examples and comparative examples. The measurements were conducted in accordance with JIS Z-1707. Specifically, the laminate was cut into strips with a width of 15 mm. The sealant layer of the laminate cut into strips was peeled from the gas barrier film using a Tensilon tensile tester (product name: Tensilon RTC-1250, manufactured by Orientech Co., Ltd.) at a peeling speed of 300 mm/min so that the sealant layer and the gas barrier film face opposite sides (that is, a peeling angle was T-shape), and the strength required for peeling (unit: N/15 mm) was measured as the lamination strength. The results are shown in Table 1.

[Piercing properties]

The following Evaluation 1 and Evaluation 2 were performed on the piercing properties of the laminate obtained in each of the examples and comparative examples. The results are shown in Table 1.

<Evaluation 1>

A piercing strength of the laminate was measured. Specifically, a needle was pierced from the protective layer side of the straw piercing opening in the laminate using a tensile compression tester (manufactured by Shimadzu Corporation). A hemispherical needle with a hemispherical tip (diameter: 0.5 mm) was used. A needle piercing speed was 50 mm/min. A measured value of the piercing strength was a peak value measured during needle piercing.

<Evaluation 2>

A straw (tip angle: 45°, material: plastic) was installed at the tip of a push-pull gauge (manufactured by Imada Co., Ltd., product name: "DPX-5T"). The straw was stabbed into the laminate from the protective layer side of the straw piercing opening. The piercing properties were evaluated based on the following criteria.

4: There is no stretching or catching, and no resistance is felt

3: There is no stretching or catching, and almost no resistance is felt.

2: There is no stretching or catching, but slight resistance is felt.

1: There is stretching or catching, and resistance is felt.

[Table 1]

| | $T_A$ (MPa) | $T_B$ (MPa) | $T_C$ (MPa} | $(T_B-T_A)$ $/T_A$ | $(T_C-T_A)$ $/T_A$ | Lamination strength (N/15mm) | Piercing properties | |
| --- | --- | --- | --- | --- | --- | --- | --- | --- |
| | | | | | | | Evaluation 1 | Evaluation 2 |
| Example 1 | 1100 | 936 | 936 | -0.15 | -0.15 | 2.5 | 3.5 | 3 |
| Example 2 | 1100 | 836 | 836 | -0.24 | -0.24 | 2.3 | 3.7 | 3 |
| Example 3 | 1100 | 1016 | 1016 | -0.08 | -0.08 | 2.5 | 3.2 | 4 |
| Example 4 | 1100 | 892 | 892 | -0.19 | -0.19 | 2.4 | 3.5 | 3 |
| Example 5 | 1100 | 1336 | 1336 | 0.21 | 0.21 | 2.1 | 3.6 | 3 |
| Example 6 | 1100 | 1090 | 1090 | 0.00 | 0.00 | 2.1 | 3.2 | 4 |
| Example 7 | 1100 | 936 | 520 | -0.15 | -0.52 | 2.5 | 4.1 | 2 |
| Comparative example 1 | 1100 | 582 | 582 | -0.47 | -0.47 | 2.2 | 7.9 | 1 |
| Comparative example 2 | 1100 | 776 | 776 | -0.29 | -0.29 | 1.8 | 8.3 | 1 |

(continued)

| | $T_A$ (MPa) | $T_B$ (MPa) | $T_C$ (MPa} | $(T_B-T_A)$ /$T_A$ | $(T_C-T_A)$ /$T_A$ | Lamination strength (N/15mm) | Piercing properties | |
|---|---|---|---|---|---|---|---|---|
| | | | | | | | Evaluation 1 | Evaluation 2 |
| Comparative example 3 | 1100 | 1560 | 1560 | 0.41 | 0.41 | 1.9 | 9.6 | 1 |

The laminates obtained in each of the examples showed good piercing properties. On the other hand, the laminates obtained in Comparative Examples 1 and 2 stretched when pierced with a straw. When the laminate obtained in Comparative Example 3 was pierced with a straw, it is caught.

**Reference Signs List**

   1 Paper substrate
   2 Adhesive resin layer
   3 Gas barrier layer
   4 Sealant layer
   5 Protective layer
   10 Laminate
   50 Container

**Claims**

1.   A gas barrier laminate comprising:

   a laminated structure including a paper substrate, an adhesive resin layer, a gas barrier layer, and a sealant layer in this order,
   wherein the sealant layer includes a cyclic olefin resin and at least one of a polyethylene resin and a polypropylene resin, and
   when a tensile modulus of the gas barrier layer is defined as $T_A$ and a tensile modulus of the sealant layer is defined as $T_B$, $T_A$ and $T_B$ satisfy the following Formula (1).

$$-0.26 \leqq (T_B-T_A)/T_A \leqq 0.30 \ldots \text{Formula (1)}$$

   , wherein the tensile modulus is measured in accordance with the norm ISO 527.

2.   A gas barrier laminate comprising:

   a laminated structure including a paper substrate, an adhesive resin layer, a gas barrier layer, and a sealant layer in this order,
   wherein the adhesive resin layer includes a cyclic olefin resin and at least one of a polyethylene resin and a polypropylene resin, and
   when a tensile modulus of the gas barrier layer is defined as $T_A$ and a tensile modulus of the adhesive resin layer is defined as $T_C$, $T_A$ and $T_C$ satisfy the following Formula (2).

$$-0.26 \leqq (T_C-T_A)/T_A \leqq 0.30 \ldots \text{Formula (2)}$$

   , wherein the tensile modulus is measured in accordance with the norm ISO 527.

3.   The gas barrier laminate according to claim 1 or 2, wherein

   the gas barrier layer includes a polyolefin film as a film substrate,
   the sealant layer and the polyolefin film are in direct contact with each other, and

a lamination strength between the sealant layer and the polyolefin film is 1 N/15 mm or more, wherein the lamination strength is measured in accordance with the norm JIS Z-1707.

**4.** The gas barrier laminate according to claim 3, wherein the gas barrier layer has a vapor deposition layer containing an inorganic oxide.

**5.** A container configured of the gas barrier laminate according to any one of claims 1 to 4.

**6.** The container according to claim 5, further comprising a straw piercing opening in which an opening is formed to pass through the paper substrate.

**Patentansprüche**

**1.** Gasbarrierelaminat, umfassend:

eine laminierte Struktur, die ein Papiersubstrat, eine Adhäsivharzschicht, eine Gasbarriereschicht und eine Dichtungsschicht in dieser Reihenfolge aufweist,
wobei die Dichtungsschicht ein zyklisches Olefinharz und mindestens eines von einem Polyethylenharz und einem Polypropylenharz aufweist, und
wenn ein Zugmodul der Gasbarriereschicht als $T_A$ definiert ist und ein Zugmodul der Dichtungsschicht als $T_B$ definiert ist, erfüllen $T_A$ und $T_B$ die folgende Formel (1).

$$-0,26 \leqq (T_B - T_A)/T_A \leqq 0,30 ...\text{Formel} \quad (1),$$

wobei der Zugmodul in Übereinstimmung mit der Norm ISO 527 gemessen wird.

**2.** Gasbarrierelaminat, umfassend:

eine laminierte Struktur, die ein Papiersubstrat, eine Adhäsivharzschicht, eine Gasbarriereschicht und eine Dichtungsschicht in dieser Reihenfolge aufweist,
wobei die Adhäsivharzschicht ein zyklisches Olefinharz und mindestens eines von einem Polyethylenharz und einem Polypropylenharz aufweist, und
wenn ein Zugmodul der Gasbarriereschicht als $T_A$ definiert ist und ein Zugmodul der Adhäsivharzschicht als $T_C$ definiert ist, erfüllen $T_A$ und $T_C$ die folgende Formel (2).

$$-0,26 \leqq (T_C - T_A)/T_A \leqq 0,30 ...\text{Formel} \quad (2),$$

wobei der Zugmodul in Übereinstimmung mit der Norm ISO 527 gemessen wird.

**3.** Gasbarrierelaminat gemäß Anspruch 1 oder 2, wobei

die Gasbarriereschicht einen Polyolefinfilm als Filmsubstrat aufweist,
die Dichtungsschicht und der Polyolefinfilm in direktem Kontakt zueinander stehen, und
eine Laminierfestigkeit zwischen der Dichtungsschicht und dem Polyolefinfilm 1 N/15 mm oder mehr ist, wobei die Laminierfestigkeit in Übereinstimmung mit der Norm JIS Z-1707 gemessen wird.

**4.** Gasbarrierelaminat gemäß Anspruch 3, wobei die Gasbarriereschicht eine dampfabgeschiedene Schicht aufweist, die ein anorganisches Oxid enthält.

**5.** Behälter, der aus dem Gasbarrierelaminat gemäß einem der Ansprüche 1 bis 4 gebildet ist.

**6.** Behälter gemäß Anspruch 5, der ferner eine Strohhalm-Durchstechöffnung umfasst, in der eine Öffnung ausgebildet ist, die durch das Papiersubstrat hindurchgeht.

**Revendications**

1. Stratifié de barrière au gaz comprenant :

   une structure stratifiée comportant un substrat en papier, une couche de résine adhésive, une couche de barrière au gaz et une couche d'étanchéité dans cet ordre,
   dans laquelle la couche d'étanchéité comporte une résine d'oléfine cyclique et au moins une d'une résine de polyéthylène et d'une résine de polypropylène, et
   lorsqu'un module de traction de la couche de barrière au gaz est défini comme $T_A$ et qu'un module de traction de la couche d'étanchéité est défini comme $T_B$, $T_A$ et $T_B$ satisfont à la formule suivante (1).

$$-0,26 \leqq (T_B - T_A)/T_A \leqq 0,30 \ldots \text{Formule} \ \ (1),$$

   dans laquelle le module de traction est mesuré conformément à la norme ISO 527.

2. Stratifié de barrière au gaz comprenant :

   une structure stratifiée comportant un substrat en papier, une couche de résine adhésive, une couche de barrière au gaz et une couche d'étanchéité dans cet ordre,
   dans laquelle la couche de résine adhésive comporte une résine d'oléfine cyclique et au moins une d'une résine de polyéthylène et d'une résine de polypropylène, et
   lorsqu'un module de traction de la couche de barrière au gaz est défini comme $T_A$ et qu'un module de traction de la couche de résine adhésive est défini comme $T_C$, $T_A$ et $T_C$ satisfont à la formule suivante (2).

$$-0,26 \leqq (T_C - T_A)/T_A \leqq 0,30 \ldots \text{Formule} \ \ (2),$$

   dans laquelle le module de traction est mesuré conformément à la norme ISO 527.

3. Stratifié de barrière au gaz selon la revendication 1 ou 2, dans lequel

   la couche de barrière au gaz comporte un film de polyoléfine en tant que substrat de film,
   la couche d'étanchéité et le film de polyoléfine sont en contact direct l'un avec l'autre, et
   une résistance de stratification entre la couche d'étanchéité et le film de polyoléfine est de 1 N/15 mm ou plus, la résistance de stratification étant mesurée conformément à la norme JIS Z-1707.

4. Stratifié de barrière au gaz selon la revendication 3, dans lequel la couche de barrière au gaz a une couche de dépôt en phase vapeur contenant un oxyde inorganique.

5. Récipient configuré du stratifié de barrière au gaz selon l'une quelconque des revendications 1 à 4.

6. Récipient selon la revendication 5, comprenant en outre une ouverture de perçage de paille dans laquelle une ouverture est formée pour passer à travers le substrat en papier.

*Fig.1*

# *Fig.2*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001171649 A
- JP 2021054078 A
- EP 3492258 A1